# EUROPÄISCHE PATENTANMELDUNG

(11) **EP 0 996 131 A1**
(43) Veröffentlichungstag der Anmeldung: **26.04.2000**
(21) Anmeldenummer: 98890304.3
(22) Anmeldetag: 16.10.1998
(51) Int. Cl.: H01B 3/04, H02K 3/32

(54) **Verfahren zur Herstellung von glimmerhältigen Isolierbändern sowie dessen Verwendung**

(71) Anmelder: ISOVOLTA Österreichische Isolierstoffwerke Aktiengesellschaft, 2355 Wiener Neudorf (AT)
(72) Erfinder: Gsellmann, Helmut, Mag.Dr., 8010 Graz (AT)
(74) Vertreter: Dungler, Karin

(57) **Zusammenfassung**

Es wird ein Verfahren zur Herstellung von glimmerhältigen Isolierbändern für Wicklungen von rotierenden elektrischen Hochspannungsmaschinen angegeben, welches nach dem Wickeln unter Vakuum und Druck mit einem lösungsmittelfreien Kunstharz imprägnierbar und anschließend unter Wärmeeinwirkung aushärtbar ist, wobei eine faserhältige Glimmerfolie, welche neben Feinglimmer zusätzlich organische und/oder anorganische Fasern aufweist, mit einer Epoxyharzmischung in Form eines Pulverlackes bestreut wird und daß die mit dem Pulverlack bestreute Seite der glimmerhältigen Folie unter Druck und erhöhter Temperatur mit einem Trägermaterial verklebt wird.

## Beschreibung

Die Erfindung betrifft ein Verfahren zur Herstellung von glimmerhältigen Isolierbändern für Wicklungselemente von rotierenden elektrischen Hochspannungsmaschinen, welches nach dem Wickeln unter Vakuum und Druck mit einem lösungsmittelfreien Kunstharz imprägnierbar und anschließend unter Wärmeeinwirkung aushärtbar ist, sowie dessen Verwendung in der Hauptisolation von rotierenden elektrischen Hochspannungsmaschinen.

Zur Isolierung von Wicklungselementen in rotierenden elektrischen Hochspannungsmaschinen hat sich in den letzten Jahren die Tränktechnik auf Basis einer Vakuum-Druckimprägnierung stark durchgesetzt. Dabei werden die Wicklungselemente aus konstruktionstechnischen Gründen entweder als Formspulen oder Leiterstäbe, vorzugsweise Röbelstäbe, ausgebildet. Diese Wicklungselemente werden mit einer glimmerhältigen Hauptisolation versehen und im Vakuum-Druckimprägnierverfahren weiterbehandelt. Dabei werden als Imprägnierharze Epoxidharze, vorzugsweise niedrigviskose lösungsmittelfreie Harzsysteme eingesetzt.

Diese durchtränken nun im Vakuum und unter Druck die aus mehreren Wicklungslagen gebildete, glimmerhältige Hauptisolation, sodaß Hohlräume, welche zwischen den Wicklungslagen Teilentladungen hervorrufen können, vollständig ausgefüllt werden, sodaß nach Aushärtung des Imprägnierharzes eine elektrisch und mechanisch stabile Isolationshülse gebildet wird.

Die Wicklungslagen der Hauptisolation werden durch glimmerhältige Isolierbänder ausgebildet. Diese werden derart hergestellt, daß eine Glimmerfolie mit einem porösen Trägermaterial unter Verwendung eines Bindemittels verklebt wird. Dieses poröse glimmerhältige Isolierband hat die Aufgabe, das vorgenannte Imprägnierharz während des Imprägnierprozesses in größtmöglichem Ausmaß aufzunehmen.

Vor allem im Generatorenbau entstand in den letzten Jahren zunehmend der Bedarf nach glimmerhältigen Isolierbändern, die neben sehr guter Verarbeitbarkeit auf modernen Wickelmaschinen auch über eine zufriedenstellende Imprägnierbarkeit verfügen sollen, da durch die zunehmende Baugröße und Leistung von Generatoren ebenso hohe Isolationswandstärken notwendig wurden.

Bekannte Isolierbänder können dieses Erfordernis nur teilweise erfüllen, da diese aufgrund ihrer physikalischen sowie chemischen Konstitution gegenüber dem eindringenden Imprägnierharz eher als Barriere wirken, sodaß bei längeren Imprägnierzeiten die Imprägniertiefe, das heißt die Anzahl an imprägnierten Wicklungslagen für hohe Isolationswandstärken, unzureichend ist.

Aufgabe der vorliegenden Erfindung ist es daher, ein glimmerhältiges Isolierband der eingangs genannten Art anzugeben, welches neben sehr guten Wickeleigenschaften auf modernen Wickelautomaten auch ein wesentlich verbessertes Imprägnierverhalten während der Vakuum-Druckimprägnierung zeigt. Zusätzlich soll dieses glimmerhältige Isolierband leicht herstellbar sowie lagerstabil sein.

Erfindungsgemäß wird daher vorgeschlagen, dieses glimmerhältige Isolierband derart herzustellen, daß eine faserhältige Glimmerfolie, welche neben Feinglimmer zusätzlich organische und/oder anorganische Fasern aufweist, mit einer Epoxyharzmischung in Form eines Pulverlackes bestreut wird und daß die mit dem Pulverlack bestreute Seite der faserhältigen Glimmerfolie unter Druck und erhöhter Temperatur mit einem Trägermaterial verklebt wird.

Vorzugsweise besteht dieses Trägermaterial aus einem Glasgewebe, einem Vlies oder einer Kunststofffolie.

Durch das Einbringen von Fasern in die Glimmerfolie wird diese poröser, sodaß dessen Kapillarwirkung gegenüber dem Imprägnierharz während der Vakuum-Druckimprägnierung erhöht wird. Die daraus resultierenden Vorteile sind kürzere Imprägnierzeiten sowie das Imprägnieren mit höher viskosen Harzen, um auch sehr hohe Isolationswandstärken gänzlich mit Imprägnierharz durchtränken zu können.

Ferner wählt man vorzugsweise einen Fasergehalt, der zwischen mindestens 3 und maximal 50 Gew.%, bezogen auf 100 Gew% faserhältige Glimmerfolie, liegt. Ein Faseranteil, der unter 3 Gew.% liegt, trägt zu keiner Verbesserung der Imprägnierbarkeit bei; ein Faseranteil über 50 Gew% verringert sogar die elektrische Festigkeit des glimmerhältigen Isolierbandes.

Weitere Vorteile des erfindungsgemäßen Verfahrens bestehen darin, daß die organischen und/oder anorganischen Fasern in der faserhältigen Glimmerfolie einen durchschnittlichen Durchmesser von 0.1 bis 20 µm und eine durchschnittliche Länge von 0.5 bis 10 mm aufweisen.

Erfindungsgemäß werden ferner die organischen Fasern aus der Gruppe der aromatischen Polyamide oder der aromatischen Polyester wie Polyethylenterephthalat und die anorganischen Fasern aus der Gruppe E-Glas, S-Glas, Siliciumglas und Aluminium ausgewählt.

Gemäß einer weiteren Variante des erfindungsgemäßen Verfahrens weist die faserhältige Glimmerfolie einen auf das lösungsmittelfreie Kunstharz wirkenden Härtungsbeschleuniger, vorzugsweise Zinknaphthenat, auf.

Zusätzlich kann die pulverförmige Epoxidharzmischung einen Härter, vorzugsweise einen aminischen Härter, enthalten.

Gemäß dem erfindungsgemäßen Verfahren weist die in Form eines Pulverlackes eingesetzte Epoxyharzmischung einen Erweichungspunkt über 85° C auf.

Die Erfindung betrifft ferner die Verwendung eines nach den oben genannten Verfahrensvarianten hergestellten, glimmerhältigen Isolierbandes als Hauptisolation in rotierenden elektrischen Hochspannungsmaschinen, wobei das glimmerhältige Isolierband in mehreren Lagen um ein Wicklungselement gewickelt und anschließend unter Vakuum und Druck mit einem lösungsmittelfreien Kunstharz imprägniert wird.

Ferner werden bei der vorgenannten Vakuum-Druckimprägnierung vorzugsweise lösungsmittelfreie Kunstharze wie z.B. Epoxy-Säureanhydridmischungen auf Basis von Bisphenol-A oder Bisphenol-F-Epoxy-harzen eingesetzt.

Epoxyharz-Säureanhydridsysteme werden üblicherweise auf 60°C - 70°C erwärmt, um eine für den Imprägniervorgang ausreichend niedrige Viskosität zu erreichen. Nach dem erfindungsgemäßen verfahren hergestellte, glimmerhältige Isolierbänder lassen sich jedoch schon bei wesentlich höherer Harzviskosität zufriedenstellend durchimprägnieren und eignen sich daher besonders gut für die Imprägnierung mit Harzen, die nur bis etwa 30°C erwärmt werden können und daher eine meist sehr hohe Imprägnierviskosität aufweisen, wie z.B. Polyesterharze mit Styrol oder Vinylalkohol als Monomer.

Die Erfindung wird nun anhand von Ausführungsbeispielen näher erläutert.

### Beispiel 1

Eine faserhältige Glimmerfolie mit einem Gewicht von 160 g/m², bestehend aus einer Mischung aus unkalziniertem Muskovit oder Phiogopit und 5 Gew% alkalifreien E-Glas-Kurzfasern, die einen Durchmesser von durchschnittlich 8 µm und eine Faserlänge von etwa 3 mm aufweisen, wird mit einer Lösung von Zinknaphthenat in Methyläthylketon imprägniert und das Lösungsmittel abgedampft. Die mit ca. 4 g/m² Zinknaphthenat vorimprägnierte faserhältige Glimmerfolie wird mit einer pulverförmigen Epoxidharzmischung mit einem Erweichungspunkt ≥ 85°C bestreut und mittels eines beheizbaren Kalanders unter Druck und Wärmeeinwirkung mit dem Trägermaterial verklebt. Zur Erzielung besonders zufriedenstellender Imprägnierwerte während der Vakuum-Druckimprägnierung kann der Epoxyharzmischung zusätzlich ein Härter, vorzugsweise aminischer Härter, zugesetzt werden.

Als Trägermaterial wird
a) ein Glasgewebe mit einem Flächengewicht von 23 g/m² eingesetzt, das mit 2 g/m² eines flexibel vernetzenden Acrylharzes beschichtet und anschließend zum Aushärten des Acrylharzes in einem Ofen bei 100°C getempert wird, oder
b) ein Glasgewebe mit einem Flächengewicht von 23 g/m² eingesetzt, das mit 0,5 g/m² Zinknaphthenat beschichtet wird, oder
c) ein Polyestervlies mit einem Flächengewicht von 20 g/m² oder
d) eine Polyesterfolie mit einem Flächengewicht von 42 g/m² eingesetzt.

### Beispiel 2

Eine faserhältige Glimmerfolie, mit einem Gewicht von 160 g/m², bestehend aus einer Mischung aus unkalziniertem Muskovit oder Phlogopit und 5 Gew% alkalifreien E-Glas-Kurzfasern, die einen Durchmesser von durchschnittlich 8 µm und eine Faserlänge von etwa 3 mm aufweisen, wird mit einer Lösung einer Epoxidharzmischung in Methyläthylketon vorimprägniert. Nach dem Abdampfen des Lösungsmittels verbleiben etwa 4 g/m² Epoxidharz in der faserhältigen Glimmerfolie. Durch diese Maßnahme wird das Ablösen von Glimmerschuppen bei der weiteren Verarbeitung verhindert, sodaß die faserhältige Glimmerfolie widerstandsfähiger gegenüber mechanischer Belastung wird.

Die so vorimprägnierte Glimmerfolie wird mit einer pulverförmigen Epoxidharzmischung mit einem Erweichungspunkt ≥ 85°C bestreut. Die derart bestreute faserhältige Glimmerfolie wird anschließend mittels eines beheizbaren Kalanders unter Druck und Wärmeeinwirkung mit dem Trägermaterial verklebt.

Als Trägermaterial wird
a) ein Glasgewebe mit einem Flächengewicht von 23 g/m², das mit 2 g/m² eines flexibel vernetzenden Acrylharzes beschichtet ist, welches zum Aushärten in einem Ofen bei 100°C getempert wird, oder
b) ein Polyestervlies mit einem Flächengewicht von 20 g/m² oder
c) eine Polyesterfolie mit einem Flächengewicht von 42 g/m² eingesetzt.

Die Vorteile eines nach dem erfindungsgemäßen Verfahren hergestellten glimmerhältigen Isolierbandes lassen sich anhand der Anzahl durchimprägnierter Lagen während der Vakuum-Druckimprägnierung im Vergleich mit bekannten glimmerhältigen Isolierbändern sehr gut darstellen.

Zu diesem Zweck werden Profilstäbe mit jeweils 20 Lagen an glimmerhältigem Isolierband halbüberlappt bewickelt, die Stirnseiten der Isolation mit Harz vergossen und die so hergestellten Modellstäbe, welche ein Wicklungselement in Form eines Leiterstabes simulieren, mit einem lösungsmittelfreien Epoxy-Säureanhydrid-Imprägnierharz bei 60°C 3 h imprägniert. Nach dem Aushärten werden die Modellstäbe quer geschnitten, um die Imprägniertiefe messen zu können.

Auf diese Weise werden ein glimmerhältiges Isolierband, hergestellt nach dem erfindungsgemäßen Verfahren gemäß Beispiel 1a) (Muster A) bzw. ein im Aufbau vergleichbares, bekanntes glimmerhältiges Isolierband, jedoch ohne Zusatz von Fasern (Muster B) verwendet.

Im folgenden Diagramm ist das Ergebnis dargestellt:

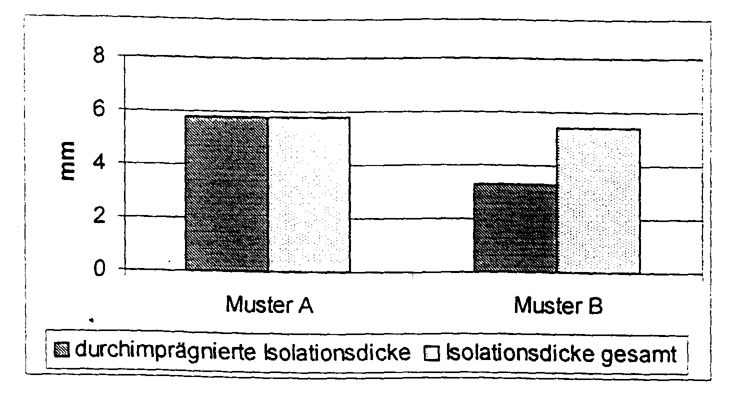

Aus dem Diagramm ist zu ersehen, daß bei der Verwendung des erfindungsgemäß hergestellten, glimmerhältigen Isolierbandes A die Isolationsdicke, d.h. die Dicke der 40 Lagen, insgesamt durchimprägniert ist, während bei bekannten Isolierbändern B ohne Zusatz von Fasern lediglich etwa zwei Drittel der Isolationsdicke imprägniert sind. Daraus ergeben sich zwangsläufig Hohlräume zwischen den einzelnen Lagen, welche zu Teilentladungen und damit zum Kurzschluß des Isolationssystems führen.

In einem weiteren Versuch werden Profilstäbe mit jeweils 10 Lagen an glimmerhältigem Isolierband halbüberlappt bewickelt, die Stirnseiten der Isolation mit Harz vergossen, sodaß die Modellstäbe, welche ein Wicklungselement in Form eines Leiterstabes simulieren, hergestellt werden. Als glimmerhältige Isolierbänder werden ein gemäß Beispiel 1a, des erfindungsgemäßen Verfahrens hergestelltes Muster A und ein glimmerhältiges Isolierband nach dem Stand der Technik (Muster B), jedoch ohne Faserzusatz, verwendet.

Anschließend werden die gehärteten mit Muster A und B versehenen Modellstäbe einem thermischen Alterungszyklus unterzogen, wobei ein Zyklus das Erwärmen der Stäbe auf 155°C über 16 Stunden und eine nachfolgende Abkühlung auf Raumtemperatur bedeutet. Nach jedem Zyklus wird der Verlustfaktorwert (tgδ) als Funktion der Spannung gemessen. Der daraus resultierende maximale Anstieg (Δ tgδ max) gibt den optischen und mechanischen Zustand der Isolierung nach jedem Zyklus wieder. Höhere Anstiegswerte bedeuten ein früheres "Aufgehen" der Isolation, das in weiterer Folge zu einem elektrischen Durchschlag und somit zum Ausfall der Isolierung führt.

Im folgenden Diagramm ist die Anzahl der thermischen Alterungszyklen gegen den maximalen Verlustfaktoranstieg (Δ tgδ max in %) dargestellt.

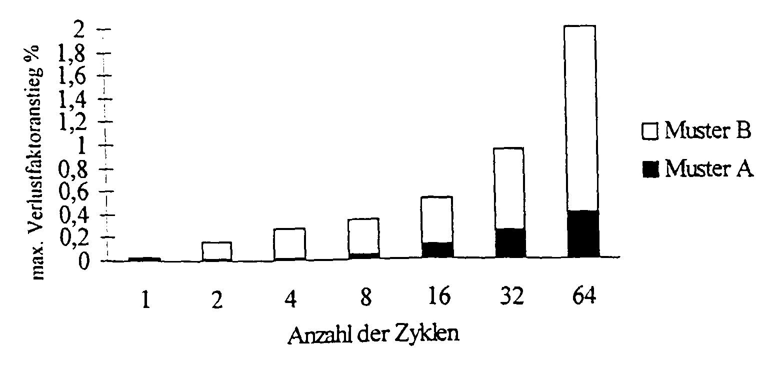

Aus dem Diagramm ist zu ersehen, daß das glimmerhältige Isolierband ohne Zusatz von Fasern (Muster B) schon nach wenigen Alterungszyklen einen höheren maximalen Verlustfaktoranstieg als das vergleichsweise dargestellte Muster A gemäß den erfindungsgemäßen Verfahren zeigt, was auch auf ein sehr rasches Delaminieren der Isolation schließen läßt.

## Patentansprüche

1. Verfahren zur Herstellung von glimmerhältigen Isolierbändern für Wicklungen von rotierenden elektrischen Hochspannungsmaschinen, welches nach dem Wickeln unter Vakuum und Druck mit einem lösungsmittelfreien Kunstharz imprägnierbar und anschließend unter Wärmeeinwirkung aushärtbar ist, dadurch gekennzeichnet, daß eine faserhältige Glimmerfolie, welche neben Feinglimmer zusätzlich organische und/oder anorganische Fasern aufweist, mit einer Epoxyharzmischung in Form eines Pulverlackes bestreut wird und daß die mit dem Pulverlack bestreute Seite der glimmerhältigen Folie unter Druck und erhöhter Temperatur mit einem Trägermaterial verklebt wird.

2. Verfahren nach Anspruch 1, daß das Trägermaterial ein Glasgewebe, ein Vlies oder eine Kunststofffolie ist.

3. Verfahren nach Anspruch 1 oder 2, dadurch gekennzeichnet, daß die organischen und/oder anorganischen Fasern in der faserhältigen Glimmerfolie einen durchschnittlichen Durchmesser von 0.1 bis 20 µm aufweisen.

4. Verfahren nach einem der Ansprüche 1 bis 3, dadurch gekennzeichnet, daß die organischen und/oder anorganischen Fasern in der faserhältigen Glimmerfolie eine durchschnittliche Länge von 0.5 bis 10 mm aufweisen.

5. Verfahren nach einem der Ansprüche 1 bis 4, dadurch gekennzeichnet, daß der Faseranteil in der faserhältigen Glimmerfolie 3 bis 50 Gew% aufweist.

6. Verfahren nach einem der Ansprüche 1 bis 5, dadurch gekennzeichnet, daß die organischen Fasern aus der Gruppe der aromatischen Polyamide oder der aromatischen Polyester wie Polyethylenterephthalat ausgewählt sind.

7. Verfahren nach einem der Ansprüche 1 bis 6, dadurch gekennzeichnet, daß die anorganischen Fasern ausgewählt aus der Gruppe E-Glas, S-Glas, Siliciumglas und Aluminium sind.

8. Verfahren nach einem der Ansprüche 1 bis 7, dadurch gekennzeichnet, daß die faserhältige Glimmerfolie einen auf das lösungsmittelfreie Kunstharz wirkenden Härtungsbeschleuniger, vorzugsweise Zinknaphthenat, aufweist.

9. Verfahren nach einem der Ansprüche 1 bis 7, dadurch gekennzeichnet, daß der Pulverlack auf Basis einer Epoxyharzmischung zusätzlich einen Härter, vorzugsweise einen aminischen Härter, enthält.

10. Verfahren nach einem der Ansprüche 1 bis 9, dadurch gekennzeichnet, daß die in Form eines Pulverlackes eingesetzte Epoxyharzmischung einen Erweichungspunkt über 85° C aufweist.

11. Verwendung eines nach einem der Ansprüche 1 bis 10 hergestellten glimmerhältigen Isolierbandes als Hauptisolation in rotierenden, elektrischen Hochspannungsmaschinen, wobei das glimmerhältige Isolierband in mehreren Lagen um ein Wicklungselement in mehreren Lagen gewickelt und anschließend unter Vakuum und Druck mit einem lösungsmittelfreien Kunstharz imprägniert wird.

12. Verwendung nach Anspruch 11, dadurch gekennzeichnet, daß das lösungsmittelfreie Kunstharz aus einer Epoxy-Säureanhydridmischung, vorzugsweise auf Basis von Bisphenol-A oder Bisphenol-F-Epoxidharzen, besteht.
